Europäisches Patentamt

European Patent Office

Office européen des brevets

(11) Publication number: **0 253 450 B1**

## EUROPEAN PATENT SPECIFICATION

(45) Date of publication of patent specification: **29.01.92**

(51) Int. Cl.5: **F16L 58/06**, E03F 3/06, F16L 57/00, C04B 28/26, B05C 7/02, B05C 7/08, B05D 7/22, //(C04B28/26,14:16, 18:08)

(21) Application number: **87201341.2**

(22) Date of filing: **13.07.87**

(54) **Device for applying a lining to the interior wall of a pipe, in particular a concrete sewer pipe.**

(30) Priority: **15.07.86 NL 8601848**

(43) Date of publication of application: **20.01.88 Bulletin 88/03**

(45) Publication of the grant of the patent: **29.01.92 Bulletin 92/05**

(84) Designated Contracting States: **AT BE CH DE ES FR GB GR IT LI LU NL SE**

(56) References cited:
| | |
|---|---|
| BE-A- 517 501 | DE-A- 3 041 973 |
| DE-A- 3 324 182 | FR-A- 1 344 288 |
| GB-A- 2 150 050 | GB-A- 2 150 664 |
| US-A- 2 168 917 | US-A- 2 575 353 |
| US-A- 3 257 698 | US-A- 3 590 445 |
| US-A- 4 256 445 | |

(73) Proprietor: **Jaartsveld's Wegenbouwbedrijf B.V. Laan van Schuylenburch 3 Postbus 14 NL-7064 ZG Silvolde(NL)**

(72) Inventor: **Van Der Goot, Arnold Voorbroek 9 NL-7161 GL Terborg(NL)**

(74) Representative: **Lips, Hendrik Jan George, Ir. et al HAAGSCH OCTROOIBUREAU Breitnerlaan 146 NL-2596 HG Den Haag(NL)**

EP 0 253 450 B1

## Description

The invention relates to a device for applying a lining to the interior wall of a pipe, in particular a concrete sewer pipe, said device comprising a frame supported by at least one wheel so that the frame can be moved in the direction of its center line, said frame carrying an apparatus for applying said lining and positioned behind said wheel as seen in the direction of movement of the device, and a doctor plate positioned behind the apply apparatus and comprising a number of segments together forming a frustoconical body the center line of which is running parallel to the center line of said frame and the smallest diameter being positioned more closely to the apply apparatus than the largest diameter, said segments being biased outwardly away from said center line.

Such a device is known by US-A-4,256,445. The object of the invention is to improve this known device such that a reliable lining of the pipe can be obtained also when during applying said lining sewage is supplied to the pipe.

Obviously in many cases it is not possible to set the sewer pipe out of duty during at least a number of hours but sewage coming into the pipe will be detrimental to the binding between the lining and the pipe.

According to the invention the apply apparatus has the shape of a disc, the rotating axis of which is mainly parallel to the centre line of the frame, and a tube is present debouching in or near the doctor plate at the lowest point of this, said tube being connected to a pump for pumping away water which is flowing to the doctor plate in the direction of movement of the device and for carrying off this water to a gutter extending obliquely downwardly in the direction of movement of the device and at its highest point lying directly before said apply apparatus.

When now the device is moved through the pipe in the same direction as the water will flow through said pipe, the water, being supplied to the pipe behind said device will flow to the doctor plate and will be pumped away and removed towards the lower lying portion of the pipe. Sewage which is flowing from above into the pipe directly before the apply apparatus will be received in the gutter and so will not arrive on the portion of the pipe which has to be lined.

In particular the uppermost doctor plate segment is executed such that it is suitable for carrying off sewage flowing on it from above such that said sewage is brought towards the tube debouching in or near the doctor plate.

In this way it is prevented that sewage flowing out of a connection might arrive on the clean tube and on the layer of material just being applied after the apply apparatus has passed said connection.

Because it is desired to make the device as small as possible and such that it is low in weight, it can be provided, that the gutter and a tube supporting the apply apparatus and guiding the tube extending between the doctor plate and said gutter are forming part of the frame of the device.

Although there will be taken care that as little dirt as possible is present on the bottom of the pipe when beginning with the lining, there always can be some dirt present, because during the activities sewage can be supplied to the pipe by means of connections.

In view of this, according to the invention it can be provided, that near the front end of the frame a brush is provided, which brush can be motor driven about a substantially horizontal shaft extending perpendicular to the center line of the frame.

In this way the wall of the tube can be cleaned directly before the lining is applied to it.

Said brush can also serve to support the frame and this can further be provided with two wheels positioned on either side of the frame and further rearwardly as seen in the direction of movement of the device but still before the apply apparatus.

By a correct positioning of the brush and the wheels a certain pressure can be exerted on the brush so that this can work well.

In view of the presence of the brush, of the discharge gutter and of the discharge tube debouching behind the doctor plate, it is desired to hold the device as well as possible near the lowest point of the pipe.

To obtain this it can be provided, that either said wheels or the brush are or is rotatable in respect of the frame about an axis substantially running through the center line of the device, controlling of the wheels or the brush taking place by means of a steering rod running parallel to the direction of movement of the device and being connected to a swivel support, said steering rod further being coupled with an element which is freely hanging downwardly from the frame, the lower end of said element carrying a weight.

When now the center line of the frame will no longer be present in the vertical plane running through the center line of the pipe to be lined, said weight will act upon the steering rod and either the wheels or the brush will be turned, so that the device will move to the lowest part of the pipe again.

Such a control device is in particular important when using an apply apparatus in the shape of a rotating disc because then a reaction moment will be exerted on the frame by which said frame will have the tendency to rotate in the pipe.

According to a preferred embodiment of the invention the rotating disc has a truncated conical shape, so that through the disc tubes and/or elements of the frame may extend themselves.

By this the plane extending around said rotating disc can be kept clear from parts of the device, so that a complete lining of the wall of the pipe can be obtained when the device is moving through it.

In particular a supply opening will be positioned near the end with the smallest diameter inside the truncated conical disc, via which supply opening material can be supplied inside the conical wall, while this end with the smallest diameter can be rotatable supported by the discharge tube extending from the doctor plate mainly in the direction of movement of the device, the greatest diameter of the conical wall lying closer to the doctor plate than the smallest diameter.

In this way a simple supply of material to the conical disc is obtained, only the discharge tube running through the conical disc, said tube forming part of the frame and serving at the same time for supporting the doctor plate segments.

According to a preferred embodiment of the invention the center portion of the opening of the conical wall will be closed by a covering plate so that a mainly radially directed slot is formed between the conical wall and the covering plate.

In particular the covering plate will be connected to the conical wall by connecting elements extending between both portions and being positioned such that, at the same time, they are serving for dispersing the material which by means of the supply opening, is brought inside the conical wall.

In practice it has appeared, that when such connecting elements are omitted the viscous material which is brought inside the conical wall by means of the supply opening can move over the rotating conical wall as a coherent mass in view of the fact that an air film will be formed between the material and the conical wall.

According to a preferred embodiment of the invention a first hose will be present running till near the apply apparatus, through which, by means of air, a mixture of sand and fly ash can be brought till near the apply apparatus and to means in which the air is separated from the mixture, a second hose being present by means of which a liquid binding agent is brought till near the apply apparatus, means being provided for mixing said materials and bringing of the mixture in the apply apparatus.

Because it is important that the binding agent is supplied to the sand-fly ash mixture in the right amount, it can be provided, that the sand-fly ash mixture, after having past the means in which the air is separated from the mixture, is received in a receptacle which is open at the upper end, and is always held filled and at its lower end is connected to a screw-extrusion plant supplying the mixture to the cone, a conduit being connected to the extrusion plant for dosed supplying binding agent to the extrusion plant.

It will be obvious that the device as a whole and so in particular the frame of it will have a given length. When now the device has to be brought, via a vertical gully in the portion of a horizontal pipe connected to this, this can give difficulties because the internal dimensions of the horizontal section of the gully mostly will be smaller than the length of the device. In view of this according to the invention it can be provided, that the frame of the device is divided in some portions which are hingedly connected to each other.

When using the device one can led down th is vertically into the gully and the foremost portion of it, then it can be brought into the pipe being horizontally connected to the gully, after which also the other portion or the other portions of the device can be brought into it.

If, as mostly is the case, a further horizontal pipe is connected to said gully extending oppositely to the first mentioned pipe, then the rearward portion of the device can be shifted in this pipe, so that the lining activities may begin as close as possible near the debouchment of the first mentioned pipe. It is, however, also possible to apply the lining manually in the forward end of the pipe.

To move the device through a pipe in the known way, use can be made of a cable, the free end of which is connected to the device and the other end being wound up by means of a winch. Obviously it is important that the device is moved through the pipe with a substantially equal velocity so that the layer applied to the wall of the pipe will have a substantially equal thickness.

It can be thought, however, of other methods for moving the device through the pipe, as e.g. by a direct driving of the wheels of the device. This, however, can give difficulties caused by the working of the rotating brush and the doctor plate which are counteracting the movement of the device. A reasonable loading of the wheels should have to be present to prevent slipping of the wheels.

It may be mentioned also that US-A-2,575,353 describes a lining device, the lining apparatus of which is formed by a rotating disc with two mainly radially running walls between which the lining material is pressed and is swept outwardly through the opening between the outer circumferences of the two walls.

No means are present for removing liquid flowing into the pipe and for preventing that said liquid will have a disadvantageous effect on the binding between the lining and the pipe.

Using a cable has the advantage that the velocity of movement of the device through the pipe can be controlled from the outside and can be changed if necessary.

Now the invention is further elucidated by means of an embodiment shown in the drawing, in which:

Fig. 1 very schematically shows a side view and partly sectional view of the device present in the pipe which by means of the device is already partially lined; and

Fig. 2 is showing a partially end view of the device of Fig. 1, with in cross section the surrounding pipe and the layer of material applied to this.

In the drawing the concrete pipe to be lined is indicated by 1 and this pipe is already over a part of it length provided with the lining 2. Further a connection 3 is debouching into the pipe, from which connection sewage might by supplied to the pipe.

The shown device comprises a frame generally indicated by 4, and mainly consisting of the gutter 5 and the tube 6 and a number of parts not further indicated.

The frame 4 is moved downstream through the pipe 1 as indicated by the arrow S and is supported by means of two wheels 7 positioned side by side. Each wheel is rotatable on a shaft 8 mounted to the lower end of a rod 9 being rotatable in a support 10 which is connected to the frame 4 in a way not further indicated. Each rod 9 is provided with a rod 11 perpendicular to it and the free ends of the rods 11 are connected to each other by means of a steering rod 12 which mainly extends in a direction perpendicular to the center line 13 of the pipe 1. To the steering rod 12 a steering rod 14 is connected, extending substantially parallel to the center line 13 and at its free end being coupled with a cable 15 suspending from a not shown portion of the frame 4 and at its end carrying a weight 16. Through the cable 15 such a force is exerted on the steering rods 12, 14 that the wheels 7 of the frame 4 always will try to bring the frame in such a position that the wheels 7 are at an equal distance from the vertical center plane of the pipe 1.

Further to the fore end, as seen in the direction of movement of the device the frame 4 is supported by a rotating brush 17 which is rotatably supported in respect of a support 18 which is connected to the frame 4 in a not further indicated way. Rotating of the brush 17 takes place by means of a motor driven by pressurized air in a not further indicated way.

Onto the tube 6 a sleeve 20 is rotatably supported by means of the bearing 19. T he sleeve 20 is provided with teeth 21 which are in engagement with a gear 22 driven by means of a pressurized air motor 23, which is supported by the frame 4 in a not further indicated way.

The sleeve 20 is connected to the wall 24 having the shape of a frustoconical cone and serving as apply apparatus. The cone wall 24 is connected to the covering plate 26 by means of connecting elements 25, such that between this covering plate and the cone wall 24 a substantially radial directed slot 27 is obtained. By means of the slot 27 material 28 is swung outwardly onto the wall of the pipe 1, as indicated by the arrows P.

The material 28 is obtained by supplying a mixture of sand and fly ash through a cyclone 30 by means of pressurized air and via a hose 29, in which the mixture is separated from the air so that the air can remove from the upper connection 31 of the cyclone 30 and the mixture of sand and fly ash from the lower connection 32 to be received in the receptacle 33 being connected to a screw-extrusion plant 34 which by means of the supports 35 is connected to the frame 4.

From the extrusion plant 34 the screw, not shown, is provided with the tooth 36 being in engagement with a gear 37 being driven by the pressurized air motor 38. The pressurized air motor 38 is supported by the plate 39 connected to the supports 35.

To the extrusion plant 34 further the hose 40 is connected via which liquid binding agent will be supplied to the extrusion plant to be mixed with the sand-fly ash mixture. A dosing device, not further indicated, takes care for it that the right mixture proportion of the materials is obtained and maintained.

The material 28 which is prepared in the extrusion plant is leaving this device by means of a bore 41 provided in the tube and debouching into the supply opening 42. Via de supply opening 42 the material 28 arrives within the cone wall 24 to be brought onto the wall of the pipe 1 in the way as described above.

The material 28 being brought onto the wall 1 in this way is having a rather rough surface and for smoothing it out the doctor plate 43 serves being divided in a lower doctor plate segment 44 and an upper doctor plate segment 45 and to side segments 46.

All doctor plate segments are hingedly connected to a number of supports 47 being mounted on the tube 6, all segments being biased to the wall of the pipe 1 by means of springs 48. The force which by each spring 48 is exerted on a doctor plate segment can be adjusted in a way not indicated for obtaining the desired result. So the spring e.g. can seize a bolt which can be connected to an arbitrary place of the related doctor plate segment by either several openings being applied in said segment or one elongated opening.

The lower doctor plate segment 44 extends itself over an angle of somewhat more than 45° at both sides of the vertical plane running through the center line 13 of the pipe 1. This lower doctor plate segment also takes care for holding the water flowing to the doctor plate in view of the fact that the sewer pipe is running somewhat downwardly in the direction of the arrow S, mentioned above. The water arriving near this lower doctor plate segment 44 is removed by means of the discharge tube 49 running through the tube 6 and making part of this and at the other side of this tube 6 being connected to a pump 50, pumping the water in the gutter 5 via the tube 51 so that it is discharged to the downstream portion of the pipe 1.

The upper doctor plate segment 45 extends itself also over a somewhat larger angle than in total 90°, the foreward edge of it being bent to form a gutter 52 in which the water can be received which can flow out of a connection 3, directly after the apply apparatus 24 has passed such a connection.

Out of the gutter 52, being closed at both ends by means of an upwardly end portion 53, the water arrived in the gutter 52 can be discharged by means of the tube 54 to arrive behind the lower doctor plate segment 44 so that it from this place can be discharged by means of the tube 49.

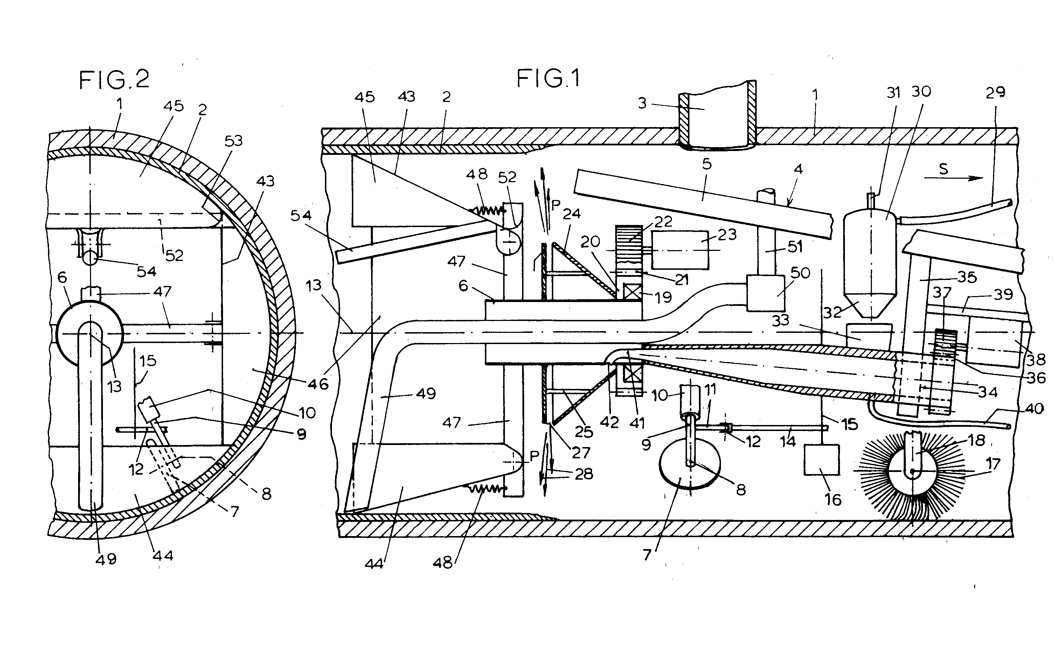

As appears from Fig. 2 the doctor plate segments 44, 45 and 46 will overlap each other somewhat in circumferential direction, so that the whole applied lining 2 will be well smoothed out. To this end the edges of the doctor plate segments will be staggered somewhat in longitudinal direction of the pipe.

When now the device has to be set into operation it will, as already said above, be brought into the pipe via a gully. The other pipes, if any, debouching into the gully will be closed beforehand and, if necessary, in such a way that the water flowing in can be pumped away. Then the hoses 29 and 40 for sand-fly ash mixture and binding agent respectively and the hose for pressurized air for driving the various motors, will be pulled through the pipe 1 in the known way and will be connected to the device, after which the device can be set in operation, the hoses being gradually pulled with it.

Further to the foremost portion of the frame 4 a not shown cable will be connected by which the device can be moved through the pipe.

As already said above it can be desirable to divide the frame 4 in some portions which are hingedly connected. So it can be thought to provide a hinge directly before the tube 6 or in the vicinity of this, but this will give no difficulties for an expert.

**Claims**

1. A device for applying a lining to the interior wall of a pipe (1), in particular a concrete sewer pipe, said device comprising a frame (4) supported by at least one wheel (7) so that the frame can be moved in the direction of its center line, said frame (4) carrying an apparatus (24) for applying said lining (2) and positioned behind said wheel (7) as seen in the direction of movement (S) of the device, and a doctor plate (43) positioned behind the apply apparatus and comprising a number of segments (44,45,46) together forming a frustoconical body the center line (13) of which is running parallel to the center line of said frame (4) and the smallest diameter being positioned more closely to the apply apparatus than the largest diameter, said segments (44,45,46) being biased outwardly away from said center line (13),
characterized in that the apply apparatus has the shape of a disc, the rotating axis of which is mainly parallel to the center line of the frame, and that a tube (49,51) is present debouching in or near the doctor plate (43) at the lowest point of this, said tube being connected to a pump (50) for pumping away water which is flowing to the doctor plate (43) in the direction of movement (S) of the device and for carrying off this water to a gutter (5) extending obliquely downwardly in the direction of movement (S) of the device and at its highest point lying directly before said apply apparatus (24).

2. A device according to claim 1,
characterized in
that the uppermost doctor plate segment (45) is executed such that it is suitable for carrying off sewage flowing on it from above such that said sewage is brought towards the tube (49,51) debouching in or near the doctor plate (43).

3. A device according to claim 1 or 2,
characterized in
that the gutter (5) and a tube (6) supporting the apply apparatus (24) and guiding the tube (49,51) extending between the doctor plate (43) and said gutter (5) are forming part of the frame (4) of the device.

4. A device according to one of the preceding claims,
characterized in
that near the front end of the frame (4) a brush (17) is provided, which brush can be motor driven about a substantially horizontal shaft extending perpendicular to the center line of the frame (4).

**5.** A device according to claim 4, characterized in that the frame (4) of the device is supported by said brush (17) and by two wheels (7) positioned on either side of the frame (4) and further rearwardly as seen in the direction of movement (S) of the device but still before the apply apparatus (24).

**6.** A device according to claim 5, characterized in that either said wheels (7) or the brush (17) are or is rotatable in respect of the frame (4) about an axis (9) substantially running through the center line (13) of the device, controlling of the wheels (7) or the brush (17) taking place by means of a steering rod (14) running parallel to the direction of movement (S) of the device and being connected to a swivel support (10), said steering rod (14) further being coupled with an element (15) which is freely hanging downwardly from the frame (4), the lower end of said element (15) carrying a weight (16).

**7.** A device according to one of the preceding claims, characterized in that the rotating disc (24) has a truncated conical shape, so that through the disc (24) tubes (6,49) and/or elements of the frame (4) may extend themselves.

**8.** Device according to claim 7, characterized in that a supply opening (42) will be positioned near the end with the smallest diameter inside the truncated conical disc (24), via which supply opening (42) material can be supplied inside the conical wall (24), said disc nearest its smallest diameter being rotatably supported by the guiding tube (6) forming part of the frame (4), the greatest diameter of the conical disc (24) lying closer to the doctor plate (43) than the part with the smallest diameter.

**9.** Device according to claim 7 or 8, characterized in that the center portion of the opening formed by the inner wall of the conical disc (24) is closed by a covering plate (26) so that a mainly radially directed slot (27) is formed between the inner wall of the conical disc (24) and the covering plate (26).

**10.** A device according to claim 9, characterized in that said covering plate (26) is connected to said conical disc (24) by connecting elements (25) extending between both portions and being positioned such that they are simultaneously serving for dispersing the lining material (28) which by means of the supply opening (42) is brought inside the conical disc (24).

**11.** A device according to one of the preceding claims, characterized in that a first hose (29) is present running till near the apply apparatus (24), through which hose, by means of air, a mixture of sand and fly ash is brought till near the apply apparatus (24) and to means (30) in which the air is separated from the mixture, a second hose (40) being present by means of which a liquid binding agent is brought till near the apply apparatus (24), means (34) being provided for mixing said materials and bringing the mixture in the apply apparatus (24).

**12.** A device according to claim 11, characterized in that the sand-fly ash mixture, after having passed the means (30) in which the air is separated from the mixture, is received in a receptacle (33) being open at its upper end and being always filled with material and at its lower end being connected to a screw-extrusion plant (34) supplying the mixture to the conical disc (24), a conduit (40) being connected to the extrusion plant (34) for dosed supplying binding agent to the extrusion plant (34).

**13.** A device according to one of the preceding claims, characterized in that the frame (4) of the device is divided in some portions which are hingedly connected to each other.

**14.** A device according to one of the preceding claims, characterized in that to move the device through a pipe to be lined, use is made of a cable, the free end of which is connected to the device and the other end is wound up by means of a winch.

**Revendications**

**1.** Dispositif pour appliquer un revêtement intérieur sur la paroi intérieure d'une canalisation (1), en particulier d'une canalisation d'égout en béton, ledit dispositif comprenant un châssis (4) porté par au moins une roue (7) de telle sorte que le châssis puisse être déplacé dans la direction de son axe central, ledit châssis (4) portant un appareil (24) pour appliquer ledit revêtement intérieur (2) et étant disposé derrière ladite roue (7) telle qu'elle est vue dans le direction de déplacement (S) du dispositif et une plaque de raclage (43) disposée derrière l'appareil d'application et comprenant un certain nombre de segments (44,45,46) formant ensemble un corps tronconique dont l'axe central (13) est orienté parallèlement à l'axe central dudit châssis (4) et dont le plus petit diamètre est disposé plus près de l'appareil d'application que le diamètre le plus grand, lesdits segments (44,45,46) étant sollicités vers l'extérieur pour être écartés dudit axe central (13),

caractérisé en ce que l'appareil d'application a la forme d'un disque dont l'axe de rotation est pratiquement parallèle à l'axe central du châssis, et en ce qu'un tube (49,51) est présent et débouche dans ou au voisinage de la plaque de raclage (43) en son point le plus bas, ledit tube étant relié à une pompe (50) pour éliminer par pompage l'eau s'écoulant vers la plaque de raclage (43) dans la direction de déplacement (S) du dispositif et pour entraîner cette eau vers une gouttière (5) s'étendant obliquement vers le bas dans la direction de déplacement (S) du dispositif et en son point le plus haut situé directement à l'avant dudit appareil d'application (24).

2. Dispositif selon la revendication 1, caractérisé en ce que le segment supérieur (45) de la plaque de raclage est réalisé de telle manière qu'il se prête à l'évacuation des eaux usées s'écoulant sur celui-ci par le haut, de telle sorte que lesdites eaux usées soient acheminées vers le tube (49,51) débouchant dans ou au voisinage de la plaque de raclage (43).

3. Dispositif selon la revendication 1 ou 2, caractérisé en ce que la gouttière (5) et un tube (6) supportant l'appareil d'application (24) et guidant le tube (46,51) s'étendant entre la plaque de raclage (43) et ladite gouttière (5), font partie du châssis (4) du dispositif.

4. Dispositif selon l'une des revendications précédentes, caractérisé en ce qu'au voisinage de l'extrémité avant du châssis (4) est disposée une brosse (17) pouvant être entraînée par un moteur autour d'un arbre sensiblement horizontal et s'étendant perpendiculairement à l'axe central du châssis (4).

5. Dispositif selon la revendication 4, caractérisé en ce que le châssis (4) du dispositif est supporté par ladite brosse (17) et par deux roues (7) disposées de part et d'autre du châssis (4) et plus loin vers l'arrière, lorsqu'elles sont vues dans la direction de déplacement (S) du dispositif, mais toujours à l'avant du dispositif d'application (24).

6. Dispositif selon la revendication 5, caractérisé en ce que lesdites roues (7) ou la brosse (17) peuvent être mises en rotation par rapport au châssis (4) autour d'un axe (9) passant sensiblement par l'axe central (13) du dispositif, l'actionnement des roues (7) ou de la brosse (17) s'effectuant au moyen d'une bielle de direction (14) disposée parallèlement à la direction de déplacement (S) du dispositif et reliée à un support pivotant (10), ladite bielle de direction (14) étant en outre accouplée à un élément (15) suspendu librement sous le châssis (4), l'extrémité inférieure dudit élément (15) portant un poids (16).

7. Dispositif selon l'une des revendications précédentes, caractérisé en ce que le disque rotatif (24) présente une forme conique tronquée, de façon à ce que des tubes (6,49) et/ou des éléments du châssis (4) puissent se prolonger au travers du disque (24).

8. Dispositif selon la revendication 7, caractérisé en ce qu'un orifice d'alimentation (42) est disposé au voisinage de l'extrémité de plus faible diamètre à l'intérieur du disque conique tronqué (24), orifice par l'intermédiaire duquel un matériau peut être introduit à l'intérieur de la paroi conique (24), ledit disque le plus proche de son diamètre le plus petit étant supporté en rotation par le tube de guidage (6) faisant partie du châssis (4), le diamètre le plus grand du disque conique (24) se situant plus près de la plaque de raclage (43) que la partie de plus petit diamètre.

9. Dispositif selon la revendication 7 ou 8, caractérisé en ce que la partie centrale de l'orifice formé par la paroi intérieure du disque conique (24) est fermée par une plaque de couverture (26) de telle sorte qu'une fente principalement orientée radialement (27) soit formée entre la paroi intérieure du disque conique (24) et la plaque de couverture (26).

10. Dispositif selon la revendication 9, caractérisé en ce que ladite plaque de couverture (26) est raccordée audit disque conique (24) par des éléments de raccordement (25) s'étendant entre ces deux parties et étant disposés de telle manière qu'ils servent simultanément à disperser le matériau de revêtement intérieur (28) qui est acheminé à l'intérieur du disque conique (24) au moyen de l'orifice d'alimentation (42).

11. Dispositif selon l'une des revendications précédentes, caractérisé en ce qu'un premier tuyau (29) est présent et se prolonge jusqu'au voisinage l'appareil d'application (24) et permet d'acheminer, au moyen d'air, un mélange de sable et de cendre volante au voisinage de l'appareil d'application (24) et à un moyen (30) dans lequel l'air est séparé du mélange, un second tuyau (40) étant présent et permettant d'acheminer un agent liant liquide au voisinage de l'appareil d'application (24), un moyen (34) étant prévu pour mélanger lesdits matériaux et acheminer le mélange dans l'appareil d'application (24).

12. Dispositif selon la revendication 11, caractérisé en ce que le mélange de cendre volante, après avoir traversé le moyen (30) dans lequel l'air est séparé du mélange, est reçu dans un réceptacle (33) ouvert à son extrémité supérieure et toujours rempli de matériau, et raccordé par son extrémité inférieure à une installation d'extrusion à vis (34) fournissant le mélange au disque conique (24), un conduit (40) étant raccordé à l'installation d'extrusion (34) pour introduire une quantité dosée d'agent liant dans l'installation d'extrusion (34).

13. Dispositif selon l'une des revendications précédentes, caractérisé en ce que le châssis (4) du dispositif est divisé en un certain nombre de parties qui sont raccordées par des charnières les unes aux autres.

14. Dispositif selon l'une des revendications précédentes, caractérisé en ce que, pour déplacer le dispositif à l'intérieur d'une canalisation à revêtir intérieurement, on utilise un câble dont l'extrémité libre est reliée au dispositif et dont l'autre extrémité est enroulée sur un treuil.

**Patentansprüche**

1. Vorrichtung zum Verkleiden der Innenwand eines Rohres (1), insbesondere eines Betonabflussrohres, wobei die Vorrichtung ein Gestell (4) umfasst, das durch wenigstens ein Rad (7) unterstützt wird, so dass das Gestell in der Richtung seiner Herzlinie bewegt werden kann, wobei das Gestell (4) einen Apparat (24) trägt, der zum Aufbringen der Verkleidung (2) dient und sich, gesehen in der Bewegungsrichtung (S) der Vorrichtung, hinder dem Rad (7) befindet, und eine Streichplatte (43), die sich hinter dem Aufbringapparat befindet und eine Anzahl Segmente (44,45,46) umfasst, die zusammen einen kegelstumpfförmigen Körper bilden, dessen Herzlinie (13) parallel zu der Herzlinie des Gestells (4) verläuft und wobei sich der kleinste Durchmesser dichter bei dem Aufbringapparat als der grösste Durchmesser befindet, wobei die Segmente (44,45,46) nach aussen weg von der Herzlinie (13) vorgespannen sind, dadurch gekennzeichnet, dass der Aufbringapparat die Form einer Scheibe aufweist, deren Drehachse im wesentlichen parallel zu der Herzlinie des Gestells verläuft, und eine Leitung (49,51) vorgesehen ist, die in oder nahe dem tiefsten Punkt der Streichplatte (43) ausmündet, wobei die genannte Leitung mit einer Pumpe (50) verbunden ist um Wasser wegzupumpen, das zur der Streichplatte (43) hin in der Bewegungsrichtung (S) der Vorrichtung strömt und um dieses Wasser zu einer Rinne (5) hin abzuführen, die sich schräg nach unten in der Bewegungsrichtung (S) der Vorrichtung erstreckt und in ihrem höchsten Punkt unmittelbar vor dem Aufbringapparat (24) liegt.

2. Vorrichting nach Anspruch 1, dadurch gekennzeichnet, dass das höchste Segment (45) der Streichplatte derart ausgebildet ist, dass es geeignet ist Abwasser abzuführen, das darauf von oben ab zuströmt, derart dass das genannte Abwasser zu der Leitung (49,51) hin gebracht wird, die in oder nahe der Streichplatte (43) ausmündet.

3. Vorrichting nach Anspruch 1 oder 2, dadurch gekennzeichnet, dass die Rinne (5) und ein Rohr (6), das den Aufbringapparat (24) unterstützt, die, die sich zwischen der Streichplatte (43) und der Rinne (5) erstreckende Leitung (49,51) führen, einen Teil des Gestells (4) der Vorrichtung bilden.

4. Vorrichting nach einem der vorangehenden Ansprüche, dadurch gekennzeichnet, dass nahe dem Vorderende des Gestells (4) eine Bürste (17) vorgesehen ist, die um eine senkrecht zur Herzlinie des Gestells (4) stehende, im wesentlichen horizontale Welle motorisch angetrieben werden kann.

5. Vorrichting nach Anspruch 4, dadurch gekennzeichnet, dass das Gestell (4) der Vorrichting durch die Bürste (17) und durch zwei Räder (7) unterstützt wird, die beiderseits des Gestells (4) und ferner rückwärts gesehen in der Bewegungsrichting (S) der Vorrichtung, aber noch vor dem Aufbringapparat (24) vorgesehen sind.

6. Vorrichtung nach Anspruch 5,
dadurch gekennzeichnet,
dass entweder die Räder (7) oder die Bürste (17) drehbar in bezug auf das Gestell (4) um eine im wesentlichen durch die Herzlinie (13) der Vorrichtung verlaufende Achse (9) sind oder ist, wobei die Steuerung der Räder (7) oder der Bürste (17) mittels einer Steuerstange (14) erfolgt, die parallel zu der Bewegungsrichtung (S) der Vorrichtung verläuft und mit einer Schwenkunterstützung (10) verbunden ist, wobei die Steuerstange (14) ferner mit einem frei von dem Gestell (4) ab nach unten hängenden Organ (5) gekuppelt ist, wobei das untere Ende des Organs (15) ein Gewicht (16) trägt.

7. Vorrichtung nach einem der vorangehenden Ansprüche,
dadurch gekennzeichnet,
dass die Drehscheibe (24) die Form eines Kegelstumpfes aufweist, so dass sich durch die Scheibe (24) Leitungen (6,49) und/oder Elemente des Gestells (4) erstrecken können.

8. Vorrichtung nach Anspruch 7,
dadurch gekennzeichnet,
dass eine Zufuhröffnung (42) nahe dem Ende mit dem kleinsten Durchmesser innerhalb der kegelstumpfförmigen Scheibe (24) vorgesehen ist, durch welche Zufuhröffnung (42) Material ins Innere der Kegelwand (24) gebracht werden kann, wobei die genannte Scheibe am dichtesten bei ihrem kleinsten Durchmesser durch die zum Gestell (4) gehörenden Führungsleitung (6) drehbar unterstützt wird, während der grösste Durchmesser der Kegelscheibe (24) dichter bei der Streichplatte (43) als der Teil mit dem kleinsten Durchmesser liegt.

9. Vorrichtung nach Anspruch 7 oder 8,
dadurch gekennzeichnet,
dass der durch die Innenwand der Kegelscheibe (24) gebildete Mittelteil der Oeffnung durch eine Verschlussplatte (26) geschlossen ist, so dass ein im wesentlichen radial gerichteter Schlitz (27) zwischen der Innenwand der Kegelscheibe (24) und der Verschlussplatte (26) gebildet ist.

10. Vorrichtung nach Anspruch 9,
dadurch gekennzeichnet,
dass die Verschlussplatte (26) mit der Kegelscheibe (24) durch Verbindingsorgane (25) verbunden ist, die sich zwischen den beiden Teilen erstrecken und derart angeordnet sind, dass sie gleichzeitig zum Verstreuung des Verkleidungsmaterials (28), das über die Zufuhröffnung (42) innerhalb der Kegelscheibe (24) gebracht ist, dienen.

11. Vorrichtung nach einem der vorangehenden Ansprüche,
dadurch gekennzeichnet,
dass ein erster, sich bis dicht bei dem Aufbringapparat (24) erstreckender Schlauch (29) vorgesehen ist, durch den hindurch mittels Luft ein Gemisch von Sand und Flugasche bis nahe dem Aufbringapparat (24) und zu Mitteln (30) hin gebracht wird, in denen die Luft von dem Gemisch getrennt wird, während ein zweiter Schlauch (40) vorgesehen ist, über welchen ein flüssiges Bindemittel bis nahe dem Aufbringapparat (24) gebracht wird, wobei Mittel (34) zum Mischen der genannten Materialen und Führen dieser Mischung in den Aufbringapparat (24) vorgesehen sind.

12. Vorrichting nach Anspruch 11,
dadurch gekennzeichnet,
dass das Sand-Flugachse-Gemisch nach dem Passieren der Mittel (30), in denen die Luft von dem Gemisch getrennt wird, in einen an seiner Oberseite offenen Behälter (33) gelangt, der immer mit Material gefüllt ist und an seinem Unterende mit einer Schraubenextrusionsanlage (34) verbunden ist, die das Gemisch der Kegelscheibe (24) zuführt, wobei eine Leitung (40) mit der Extrusionsanlage (34) zum dosierten Zuführen von Bindemittel an die Extrusionsanlage (34) verbunden ist.

13. Vorrichting nach einem der vorangehenden Ansprüche,
dadurch gekennzeichnet,
dass das Gestell (4) der Vorrichtung in einigen gelenkig mit einander verbunden Teilen verteilt ist.

14. Vorrichtung nach einem der vorangehenden Ansprüche,
dadurch gekennzeichnet,
dass zum Bewegen der Vorrichtung durch ein zu verkleidendes Rohr hindurch ein Kabel benutzt wird, dessen freies Ende mit der Vorrichtung verbunden ist und dessen anderes Ende mittels einer Winde aufgewickelt wird.

FIG.1

FIG.2